# FASCICULE DE BREVET EUROPEEN

(11) **EP 3 807 506 B1**
(45) Date de publication et mention de la délivrance du brevet: **28.05.2025**
(21) Numéro de dépôt: 19739332.5
(22) Date de dépôt: 13.06.2019
(51) Int. Cl.: F02C 7/12

(54) **PROCEDE DE FABRICATION D'UN ECHANGEUR THERMIQUE POUR UNE TURBOMACHINE**
VERFAHREN ZUR HERSTELLUNG EINES WÄRMETAUSCHERS FÜR EINEN TURBINENMOTOR
METHOD FOR MANUFACTURING A HEAT EXCHANGER FOR A TURBINE ENGINE

(30) Priorité: 14.06.2018 FR 1855246
(43) Date de publication de la demande: 21.04.2021
(73) Titulaire: SAFRAN AIRCRAFT ENGINES, 75015 Paris (FR)
(72) Inventeur: GUILLOU, Lancelot, 77550 Moissy-Cramayel (FR); AUBERGER, Stéphane, Louis, Lucien, 77550 Moissy-Cramayel (FR)
(74) Mandataire: Ernest Gutmann - Yves Plasseraud S.A.S.
(86) Numéro de dépôt international: PCT/FR2019/051426
(87) Numéro de publication internationale: WO 2019/239070

(56) Documents cités:
- US-A1- 2014 044 525
- US-A1- 2018 087 852

## Description

### DOMAINE

La présente invention concerne un procédé de fabrication d'un échangeur thermique annulaire pour une turbomachine, en particulier un échangeur thermique annulaire destinée à être monté dans une veine secondaire d'écoulement d'air.

### CONTEXTE

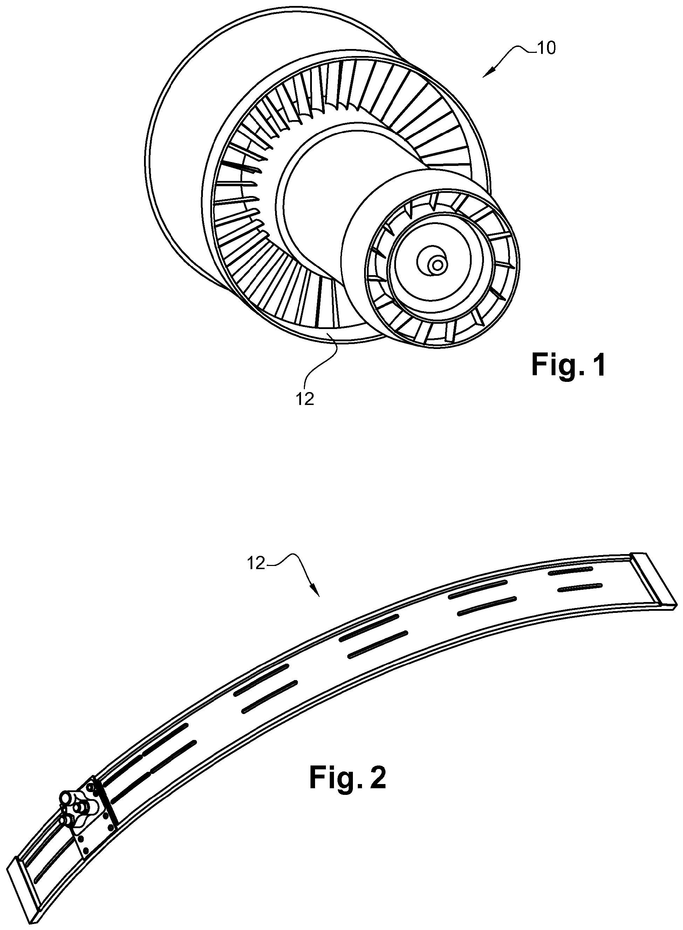

La figure 1 représente une turbomachine 10 à double flux qui comprend des pièces mobiles qui frottent contre d'autres pièces mobiles ou contre des pièces fixes, cette liaison est par exemple un palier. Pour ne pas se rompre à cause de l'échauffement dû aux frottements, les pièces sont arrosées d'huile qui permet d'une part de limiter (ou contenir) leur échauffement et, d'autre part, de les lubrifier pour faciliter le glissement des pièces les unes sur les autres.

L'huile circule dans un circuit pourvu d'échangeurs thermiques, notamment des échangeurs huile/air 12, comme représenté en figure 2, ayant une matrice, sous la forme d'une conduite sinueuse conformée de manière à réaliser un échange de chaleur, dans laquelle l'huile provenant desdites pièces est introduite puis refroidie avant d'être de nouveau injectée sur lesdites pièces. L'échangeur thermique représenté en figure 2 est un échangeur thermique annulaire qui est monté sur la face radialement interne ou externe (par rapport à l'axe longitudinal de la turbomachine) d'une virole annulaire délimitant radialement vers l'extérieur ou l'intérieur une veine annulaire d'écoulement d'un flux d'air secondaire.

Lors d'un démarrage d'une turbomachine en conditions froides (par exemple avec une température inférieure à 0°C), l'huile de l'échangeur 12 air/huile (ou des échangeurs le cas échant) peut être gelée rendant difficile voire impossible l'échange thermique entre l'huile et l'air puisque l'huile ne peut circuler dans la matrice de l'échangeur. Il est alors nécessaire de réchauffer préalablement la matrice de l'échangeur de chaleur air/huile.

Pour cela, il est connu de pourvoir l'échangeur de chaleur air/huile d'une conduite de dérivation servant de canal de décongélation et qui entoure la matrice de l'échangeur de chaleur air/huile de manière à réchauffer l'huile gelée. Cette conduite de dérivation est reliée à son extrémité amont à l'entrée de l'échangeur de chaleur et à la sortie de l'échangeur de chaleur. Le circuit d'huile comprend également une vanne de commande du débit d'huile dans la conduite de dérivation afin de n'autoriser la circulation d'huile dans la matrice de l'échangeur que lorsque la température est inférieure à un seuil prédéterminé. Toutefois, la section de passage d'huile de la conduite de dérivation étant inférieure à la section de passage d'huile dans l'échangeur de chaleur air/huile, il existe une surpression dans le circuit d'huile lorsque la matrice de l'échangeur est gelée. La surpression induit un risque d'endommagement du circuit d'huile.

Afin de réduire cette surpression, il a déjà été proposé de relier l'extrémité de la conduite de dérivation à l'extrémité aval de la conduite de dérivation de manière à dériver une partie du fluide de la conduite de dérivation, réduisant ainsi la pression en fluide dans celle-ci en conditions froides de fonctionnement. Si cette solution est intéressante, elle est toutefois difficile à mettre en œuvre par usinage sur un échangeur thermique puisque cela impose de modifier l'intégrité structurelle de l'échangeur thermique et nécessite l'ajout de pièces d'étanchéité qui sont complexes à mettre en œuvre.

Le document US2014044525A1 décrit un ensemble échangeur de chaleur destiné à être utilisé dans un moteur à turbine à gaz, cet ensemble comprenant une soupape de dérivation et au moins une partie de corps. La partie corps comprend au moins un canal d'entrée de décongélation en communication d'écoulement avec la soupape de dérivation, une pluralité de canaux de refroidissement en communication d'écoulement avec la soupape de dérivation et le au moins un canal d'entrée de décongélation, et au moins un canal de sortie de décongélation en communication d'écoulement avec la soupape de dérivation et le au moins un canal d'entrée de décongélation.

Le document US2018087852A1 décrit une vanne de dérivation à double siège prévue pour un échangeur de chaleur de surface.

L'invention a notamment pour but d'apporter une solution simple, efficace et économique à ce problème.

### RESUME DE L'INVENTION

La présente invention concerne tout d'abord un procédé de fabrication d'un échangeur thermique annulaire, en particulier destiné à être montée sur la face radialement interne ou externe d'une virole annulaire d'un carter d'une turbomachine à double flux, comprenant les étapes suivantes :
- obtenir par extrusion une préforme de l'échangeur thermique au moyen d'une filière conformée de manière à ce que la préforme comprennent :
   o des premières conduites pour la circulation d'un fluide à refroidir,
   o des secondes conduites agencées de part et d'autre des premières conduites dans une direction perpendiculaire à la direction d'extrusion,
- réaliser un perçage depuis l'extérieur dans la préforme, ce perçage débouchant dans l'une donnée des secondes conduites de la préforme,
- introduire à l'intérieur dudit perçage de la seconde conduite donnée un organe d'obturation partielle de sa section de passage.

Selon l'invention, l'échangeur thermique est réalisé par extrusion ce qui permet d'obtenir des premières et secondes conduites, les premières conduites servant à la circulation de fluide, en particulier de l'huile, à refroidir et les secondes conduites servant à la circulation de fluide de décongélation du fluide gelé qui est dans les premières conduites, ce qui explique l'agencement de part et d'autre des premières conduites. En particulier, pour éviter la surpression dans la seconde conduite, on réalise un perçage après obtention de la préforme et on l'obture partiellement, c'est-à-dire de manière à laisser un faible passage de fluide de part et d'autre de l'organe d'obturation.

Egalement, le procédé peut comprendre :
- Réaliser dans une partie médiane de la préforme et depuis l'extérieur de la préforme une première ouverture d'entrée de fluide débouchant dans certaines seulement des premières conduites,
- Réaliser dans ladite partie médiane de la préforme et depuis l'extérieur de la préforme une première ouverture de sortie de fluide débouchant dans lesdites certaines premières conduites,
- Bloquer la circulation de fluide dans lesdites certaines premières conduites dans la direction d'extrusion entre ladite première ouverture d'entrée et ladite première ouverture de sortie.

Selon l'invention, le procédé comprend une étape de réalisation dans une partie médiane de la préforme et depuis l'extérieur de la préforme d'une seconde ouverture d'entrée de fluide débouchant dans la seconde conduite donnée et d'une seconde ouverture de sortie de fluide débouchant dans la seconde conduite donnée, ledit organe d'obturation étant intercalé le long de la direction d'extrusion entre la seconde ouverture d'entrée et la seconde ouverture de sortie.

Préférentiellement, le procédé comprend les étapes suivantes :
- Ajouter des organes de liaison fluidiques aux extrémités de la préforme de manière à :
   - créer un écoulement de fluide dans le premier circuit entre la première ouverture d'entrée et la première ouverture de sortie ;
   - créer un écoulement de fluide dans le second circuit entre la seconde ouverture d'entrée et la seconde ouverture de sortie ;

Ces organes de liaison fluidique peuvent être obtenus de plusieurs manières et il n'est pas nécessaire ici d'en décrire une réalisation spécifique, l'homme du métier comprenant que l'usinage est notamment l'une des techniques qui peut être utilisée pour arriver à la circulation de fluide souhaitée.

Egalement, la première ouverture d'entrée peut être réalisée par la formation d'un renfoncement dans l'épaisseur de la préforme suivie de la réalisation de perçages de liaison fluidique auxdites certaines premières conduites.

Par ailleurs, la seconde ouverture d'entrée peut être réalisée par la formation dudit renfoncement suivie de la réalisation d'un perçage de liaison fluidique à ladite seconde conduite donnée. Ainsi, dans cette configuration, le renfoncement formé dans la préforme forme la première ouverture d'entrée et la seconde ouverture d'entrée.

Le procédé peut également comprendre une étape d'ajout d'une plaque d'étanchéité au niveau de la partie médiane de la préforme, cette plaque étant pourvue de découpe de passage de fluide. Les pourtours des découpes sont pourvus de joints à contours fermés venant s'appliquer sur la préforme de manière à réaliser une jonction étanche.

Egalement, la plaque d'étanchéité peut être recouverte d'une plaque pourvue de conduits de liaison fluidique pour l'alimentation en fluide des premières et secondes conduites et la sortie de fluide depuis les premières et secondes conduites.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en perspective d'une partie d'un échangeur thermique annulaire montée dans la turbomachine de la figure 1 ;
- la figure 3 est une vue schématique d'un échangeur destiné à être réalisé avec le procédé selon l'invention et qui montre plus particulièrement l'écoulement d'huile ;
- la figure 4 est une vue schématique en perspective illustrant les différentes pièces constitutives de l'échangeur thermique obtenu avec le procédé selon l'invention ;
- la figure 5 est vue schématique en perspective illustrant la mise en place d'un pion d'obturation partielle d'une conduite du second circuit ;
- la figure 6 est une vue schématique en coupe de l'assemblage des pièces de la figure 4.

### DESCRIPTION DETAILLEE

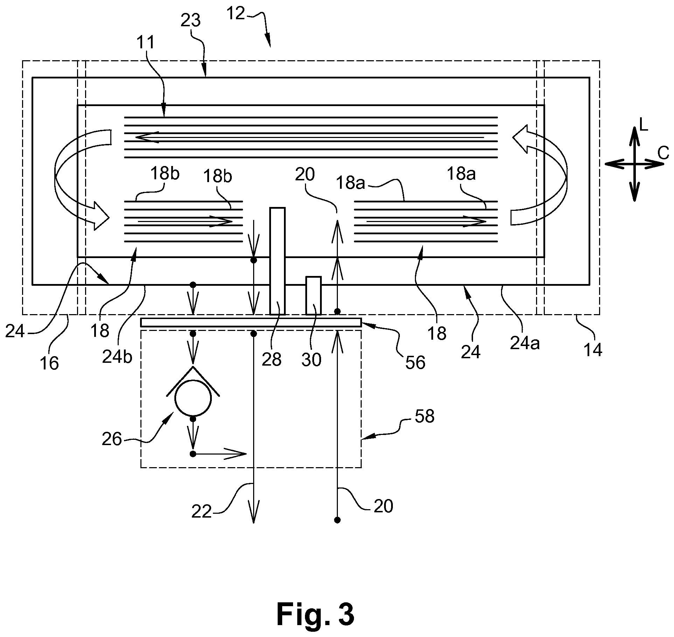

La figure 3 représente de manière schématique le principe de circulation d'un fluide à refroidir, en particulier de l'huile, dans un échangeur thermique 12 comme représenté en figure 2. Comme cela est représenté, l'échangeur comprend un premier circuit formé de premières conduites 11 et 18 pour la circulation d'huile à refroidir et un second circuit formé de secondes conduites 23 et 24 pour la circulation d'huile de décongélation des premières conduites 11 et 18. L'échangeur 12 est un échangeur annulaire qui s'étend autour de l'axe de la turbomachine. Sur la figure 3 sont représentées la dimension longitudinale de l'échangeur selon la direction L et la dimension circonférentielle de l'échangeur selon la direction C.

Comme cela est visible, certaines des premières conduites 11 s'étendent entre deux organes de liaison fluidique 14, 16, tandis que d'autres premières conduites 18 comprennent une première portion 18a et une seconde portion 18b. Les premières portions 18a des premières conduites 18 sont reliées à leurs extrémités amont à une entrée 20 commune d'alimentation en huile et à leurs extrémités aval au premier organe 14 de liaison fluidique. Les premières conduites 11 sont reliées en amont au premier organe 14 de liaison fluidique et en aval au second organe 16 de liaison fluidique. La sortie du second organe 16 de liaison fluidique est reliée aux secondes portions 18b des premières conduites 18 dont les extrémités aval sont reliées à une sortie d'huile 22.

Les secondes conduites 23, 24, dans le cas présent au nombre de deux sont formées de part et d'autre des premières conduites 11, 18 dans la direction longitudinale L. L'une des secondes conduites 23 s'étend entre les premier 14 et second 16 organes de liaison fluidique. L'autre 24 des secondes conduites comprend une première portion 24a est reliée à une entrée d'huile qui est ici la même entrée d'huile 20 que celle alimentant les premières portions 18a des premières conduites 18. L'extrémité aval de la première portion 24a de la seconde conduite 24 est reliée au premier organe 14 de liaison fluidique qui alimente en entrée la seconde conduite 23, laquelle seconde conduite 23 alimente en huile à son tour le second organe 16 de liaison fluidique communiquant en sortie avec la seconde portion 24b de la seconde conduite 24. En sortie, cette seconde portion 24b de la seconde conduite 24 est reliée à une vanne 26 d'ouverture/fermeture, qui autorise ou interdit l'écoulement d'huile dans les secondes conduites 23, 24. Ainsi, cette vanne 26 autorise ou non la circulation d'huile dans le canal entourant les premières conduites 11, 18 afin de les réchauffer en cas de congélation de celles-ci en conditions froides de fonctionnement. Ce canal de décongélation est formé par la première portion 24a de seconde conduite 24, le premier organe 14 de liaison fluidique, la seconde conduite 23, le second organe 16 de liaison fluidique, la seconde portion 24b de la seconde conduite 24.

Sont également visibles sur la figure 3, un séparateur 28 prévu pour séparer fluidiquement les premières portions 18a et secondes 18b des premières conduites 18 et un pion 30 d'obturation partielle de la seconde conduite 24, l'intérêt de ces pièces apparaissant complètement ci-après.

Pour éviter une surpression dans la conduite de décongélation, une dérivation d'huile est prévue entre l'entée 20 et la sortie 22 de la conduite de décongélation. Ainsi, une partie de l'huile peut s'écouler directement de l'extrémité amont de la première portion 24a de seconde conduite 24 vers l'extrémité aval de la seconde portion 24b de seconde conduite 24 sans passer par la seconde conduite 23 puisque le pion 30 obture partiellement la section de passage de fluide et délimite un canal 31 de dérivation du canal de décongélation.

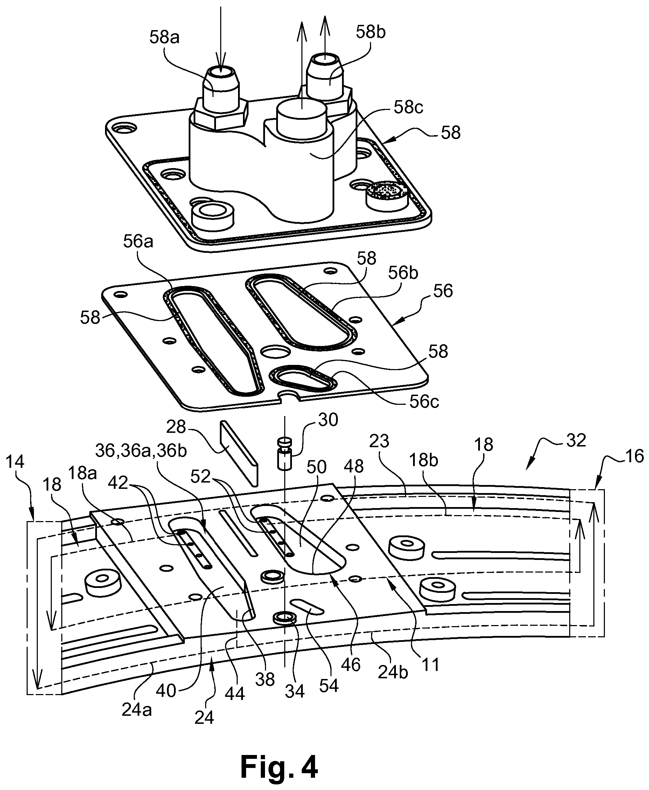

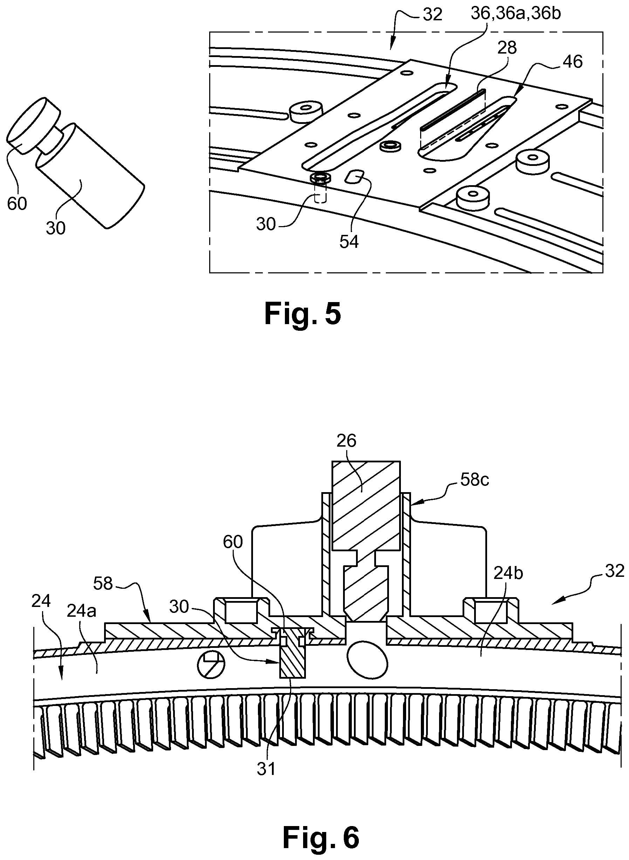

On se réfère maintenant aux figures 4 et 5. Pour réaliser l'échangeur thermique 12 ainsi décrit précédemment, le procédé selon l'invention propose en premier lieu de fournir un bloc prêt à être inséré dans une filière et réaliser une préforme par extrusion, laquelle préforme 32 est conformée de manière à comprendre :
- des premières conduites 11, 18 pour la circulation d'un fluide à refroidir (seules une première conduite 11 et une première conduite 18 sont illustrées en pointillées sur la figure 4),
- des secondes conduites 23, 24 agencées de part et d'autre des premières conduites 11, 18 dans une direction perpendiculaire à la direction d'extrusion.

Les premières conduites 11, 18 et les secondes conduites 23, 24 sont parallèles les unes aux autres. Les premières conduites 11, 18 s'étendent ainsi d'une extrémité à l'autre de la préforme 32 obtenue immédiatement après extrusion. Il en est de même des secondes conduites 23, 24 qui entourent les premières conduites 11, 18. Dans l'application de l'échangeur thermique 12 indiqué ici, il y a une seule seconde conduite 23, 24 de part et d'autre des premières conduites 11, 18, même s'il pourrait y en avoir plus.

Dans une étape postérieure, on réalise un perçage 34 depuis l'extérieur de la préforme 32, ce perçage 34 étant débouchant dans la seconde conduite 24 donnée. Plus précisément, ce perçage 34 sépare la première portion 24a de la seconde conduite 24 et la seconde portion 24b de la seconde conduite 24 telle qu'exposée précédemment. Pour réaliser la dérivation précitée sans que celle-ci n'obère le fonctionnement nominal de la conduite de décongélation, un organe 30, ici un pion, est introduit dans le perçage 34 pour obturer partiellement la section de passage de la seconde conduite 24.

A ce stade de préparation de la préforme, celle-ci présente des premières et secondes conduites qui débouchent aux extrémités circonférentielles de la préforme. Toutefois, il n'y encore aucune entrée ou sortie d'huile.

Ainsi, on réalise une ouverture 36 dans une partie médiane en direction perpendiculaire à la préforme 32. Cette ouverture 36 comprend un renfoncement 38 dans le fond 40 duquel sont réalisés des perçages 42 débouchant dans les premières portions 18a des premières conduites 18. Un autre perçage 44 est également réalisé dans le fond 40 du renfoncement 38 et communique avec l'extrémité amont de la première portion 24a de seconde conduite 24. Ainsi, le renfoncement 38 et les perçages 42 forment une première ouverture 36a d'entrée d'huile du premier circuit. Egalement, le renfoncement 38 et le perçage 44 forment une seconde ouverture 36b d'entrée d'huile du second circuit.

Pour permettre une sortie d'huile, on réalise également une première ouverture 46 de sortie d'huile laquelle comprend un renfoncement 48 formé dans l'épaisseur de la préforme 32 et dans le fond 50 duquel sont réalisés des perçages 52 de sortie d'huile des secondes portions 18b de premières conduites 18.

Pour éviter que l'huile ne circule entre les premières 18a et secondes portions 18b des premières conduites 18, un séparateur 28 est inséré entre la première ouverture 36a d'entrée d'huile et la première ouverture 46 sortie d'huile, dans la direction perpendiculaire à l'extrusion.

Egalement, une seconde ouverture 54 de sortie d'huile est réalisée et autorise la sortie d'huile de l'extrémité aval de la seconde portion 24b de seconde conduite 24.

Ainsi réalisée, la préforme permet lorsqu'elle est combinée avec les premier 14 et second 16 organes de liaison fluidique de former l'échangeur 12 de chaleur délimitant le premier circuit d'huile pour le refroidissement de l'huile et le second circuit d'huile pour la décongélation du premier circuit d'huile.

Comme cela est bien représenté sur la figure 4, une plaque d'étanchéité 56 est intercalée entre la partie médiane de la préforme 32 et une plaque de collecte 58. La plaque d'étanchéité 56 comprend trois découpes, une première découpe 56a est destinée à venir entourer la périphérie du renfoncement 38, une deuxième découpe 56b est destinée à venir entourer la périphérie du renfoncement 48 et une troisième découpe 56c est destinée à venir entourer le débouché la seconde ouverture 54 de sortie. Des joints 58 sont montés sur les pourtours des première, deuxième et troisième découpes 56a, 56b, 56c et réalisent l'étanchéité sur la préforme 32. La plaque de collecte 58 comprend un conduit d'alimentation 58a en huile du renfoncement 38 pour alimenter en huile le premier circuit et le second circuit et un conduit de sortie d'huile 58b du renfoncement 48. Il comprend également un conduit 58c de sortie d'huile de la seconde ouverture 54 de sortie d'huile.

La figure 6 illustre une vue en coupe des pièces représentées en figures 4 et 5. Sur cette figure, on observe que le pion 30 d'obturation partielle de la seconde conduite 24 donnée est bloqué en translation par la plaque de collecte 58 et par un méplat 60 en appui sur la préforme 32.

## Revendications

1. Procédé de fabrication d'un échangeur (12) thermique annulaire, en particulier destiné à être monté sur la face radialement interne ou externe d'une virole annulaire d'un carter d'une turbomachine à double flux, comprenant les étapes suivantes :
- obtenir par extrusion une préforme (32) de l'échangeur thermique (12) au moyen d'une filière conformée de manière à ce que la préforme (32) comprennent :
o des premières conduites (11, 18) pour la circulation d'un fluide à refroidir,
o des secondes conduites (23, 24) agencées de part et d'autre des premières conduites (11, 18) dans une direction perpendiculaire à la direction d'extrusion,
- réaliser un perçage (34) depuis l'extérieur dans la préforme (32), ce perçage (34) débouchant dans l'une (24) donnée des secondes conduites de la préforme (32),
- introduire à l'intérieur dudit perçage (34) de la seconde conduite (24) donnée un organe d'obturation (30) partielle de sa section de passage, ledit procédé étant **caractérisé par le fait qu'**il comprend une étape de réalisation dans une partie médiane de la préforme (32) et depuis l'extérieur de la préforme (32) d'une seconde ouverture (36b) d'entrée de fluide débouchant dans la seconde conduite (24) donnée et d'une seconde ouverture (54) de sortie de fluide débouchant dans la seconde conduite (24) donnée, ledit organe (30) d'obturation étant intercalé le long de la direction d'extrusion entre la seconde ouverture d'entrée (36b) et la seconde ouverture de sortie (54).

2. Procédé selon la revendication 1, dans lequel il comprend :
- Réaliser dans une partie médiane de la préforme (32) et depuis l'extérieur de la préforme (32) une première ouverture (36a) d'entrée de fluide débouchant dans certaines seulement des premières conduites (18),
- Réaliser dans ladite partie médiane de la préforme (32) et depuis l'extérieur de la préforme une première ouverture (46) de sortie de fluide débouchant dans lesdites certaines premières conduites (18),
- Bloquer la circulation de fluide dans lesdites certaines premières conduites (18) dans la direction d'extrusion entre ladite première ouverture d'entrée (36a) et ladite première ouverture (46) de sortie.

3. Procédé selon la revendication 2, dans lequel il comprend :
- Ajouter des organes (14, 16) de liaison fluidique aux extrémités de la préforme (32) de manière à :
o créer un écoulement de fluide dans le premier circuit entre la première ouverture (36a) d'entrée et la première ouverture (46) de sortie ;
o créer un écoulement de fluide dans le second circuit entre la seconde ouverture (36b) d'entrée et la seconde ouverture (54) de sortie.

4. Procédé selon la revendication 3, dans lequel la première ouverture (36a) d'entrée est réalisée par la formation d'un renfoncement (38) dans l'épaisseur de la préforme (32) suivie de la réalisation de perçages (42) de liaison fluidique auxdites certaines premières conduites (18).

5. Procédé selon la revendication 4, dans lequel la seconde ouverture (36b) d'entrée est réalisée par la formation dudit renfoncement (38) suivie de la réalisation d'un perçage (44) de liaison fluidique à ladite seconde conduite donnée (24).

6. Procédé selon l'une des revendications 1 à 5, dans lequel il comprend une étape d'ajout d'une plaque d'étanchéité (56) au niveau de la partie médiane de la préforme, cette plaque étant pourvue de découpe de passage de fluide.

7. Procédé selon la revendication 6, dans lequel la plaque d'étanchéité (56) est recouverte d'une plaque (58) de collecte pourvue de conduits de liaison fluidique pour l'alimentation en fluide des premières et secondes conduites et la sortie de fluide depuis les premières et secondes conduites.

## Patentansprüche

1. Verfahren zur Herstellung eines ringförmigen Wärmetauschers (12), der insbesondere dazu bestimmt ist, auf der radial inneren oder äußeren Seite eines Mantelrings von einem Gehäuse eines Mantelstromtriebwerks montiert zu werden, umfassend die folgenden Schritte:
- Erhalten eines Vorformlings (32) des Wärmetauschers (12) durch Strangpressen mittels einer Düse, die so ausgebildet ist, dass der Vorformling (32) umfasst:
• erste Leitungen (11, 18) für die Zirkulation eines zu kühlenden Fluids,
• zweite Leitungen (23, 24), die auf beiden Seiten der ersten Leitungen (11, 18) in einer Richtung senkrecht zur Strangpressrichtung angeordnet sind,
- Herstellen einer Bohrung (34) von außen in den Vorformling (32), wobei diese Bohrung (34) in eine gegebene (24) der zweiten Leitungen des Vorformlings (32) mündet,
- Einführen eines Verschlussorgans (30) zum teilweisen Verschließen seines Durchlassquerschnitts in das Innere der Bohrung (34) der gegebenen zweiten Leitung (24),
wobei das Verfahren **dadurch gekennzeichnet ist, dass** es einen Schritt des Herstellens einer in die gegebene zweite Leitung (24) mündenden zweiten Fluideinlassöffnung (36b) und einer in die gegebene zweite Leitung (24) mündenden zweiten Fluidauslassöffnung (54) in einem mittleren Teil des Vorformlings (32) von der Außenseite des Vorformlings (32) her umfasst, wobei das Verschlussorgan (30) in Strangpressrichtung zwischen der zweiten Einlassöffnung (36b) und der zweiten Auslassöffnung (54) eingesetzt ist.

2. Verfahren nach Anspruch 1, wobei es umfasst:
- Herstellen einer nur in bestimmte erste Leitungen (18) mündenden ersten Fluideinlassöffnung (36a) in einem mittleren Teil des Vorformlings (32) von der Außenseite des Vorformlings (32) her,
- Herstellen einer in die bestimmten ersten Leitungen (19) mündenden ersten Fluidauslassöffnung (46) in dem mittleren Teil des Vorformlings (32) von der Außenseite des Vorformlings her,
- Absperren der Fluidzirkulation in den bestimmten ersten Leitungen (18) in Strangpressrichtung zwischen der ersten Einlassöffnung (36a) und der ersten Auslassöffnung (46).

3. Verfahren nach Anspruch 2, wobei es umfasst:
- Hinzufügen von Organen (14, 16) zur Strömungsverbindung an den Enden des Vorformlings (32), so dass
• eine Fluidströmung in dem ersten Kreislauf zwischen der ersten Einlassöffnung (36a) und der ersten Auslassöffnung (46) erzeugt wird;
• eine Fluidströmung in dem zweiten Kreislauf zwischen der zweiten Einlassöffnung (36b) und der zweiten Auslassöffnung (54) erzeugt wird.

4. Verfahren nach Anspruch 3,
wobei die erste Einlassöffnung (36a) durch Ausbilden einer Vertiefung (38) in der Dicke des Vorformlings (32) und die anschließende Herstellung von Bohrungen (42) zur Strömungsverbindung mit den bestimmten ersten Leitungen (18) hergestellt wird.

5. Verfahren nach Anspruch 4,
wobei die zweite Einlassöffnung (36b) durch Ausbilden der Vertiefung (38) und die anschließende Herstellung einer Bohrung (44) zur Strömungsverbindung mit der gegebenen zweiten Leitung (24) hergestellt wird.

6. Verfahren nach einem der Ansprüche 1 bis 5,
wobei es einen Schritt des Hinzufügens einer Dichtungsplatte (56) im Bereich des mittleren Teils des Vorformlings umfasst, wobei diese Platte mit Ausschnitten für den Fluiddurchlass versehen ist.

7. Verfahren nach Anspruch 6,
wobei die Dichtungsplatte (56) von einer Sammelplatte (58) bedeckt ist, die mit Strömungsverbindungsleitungen für die Zufuhr von Fluid zu den ersten und zweiten Leitungen und den Austritt von Fluid aus den ersten und zweiten Leitungen versehen ist.

## Claims

1. Method for manufacturing an annular heat exchanger (12), in particular intended to be mounted on the radially inner or outer face of an annular shell of a casing of a double-flow turbomachine, comprising the following steps:
- obtaining by extrusion a heat exchanger (12) preform (32) by means of a die shaped so that the preform (32) comprises:
o first pipes (11, 18) for the circulation of a fluid to be cooled,
o second pipes (23, 24) arranged on either side of the first pipes (11, 18) in a direction perpendicular to the direction of extrusion,
- making a hole (34) from the outside in the preform (32), this hole (34) leading into one (24) of the second pipes of the preform (32),
- introducing into said hole (34) of the second given pipe (24) a member (30) for partially closing off its passage cross-section
said method being **characterized in that** it comprises a step of making in a middle portion of the preform (32) and from the outside of the preform (32) a second fluid inlet aperture (36b) opening into the second given pipe (24) and a second fluid outlet aperture (54) opening into the second given pipe (24), said sealing member (30) being interposed along the extrusion direction between the second inlet aperture (36b) and the second outlet aperture (54).

2. Method according to claim 1, comprising:
- Making in said middle part of the preform (32) and from the outside of the preform (32) a first fluid outlet aperture (36a) opening into said certain first pipes (18),
- Making in said middle part of the preform (32) and from the outside of the preform a first fluid outlet aperture (46) opening into said certain first pipes (18),
- Blocking the flow of fluid in said certain first pipes (18) in the direction of extrusion between said first inlet aperture (36a) and said first outlet aperture (46).

3. Method according to claim 2, comprising:
- Adding fluidic bonding members (14, 16) to the ends of the preform (32) so as to:
o create a fluid flow in the first circuit between the first inlet aperture (36a) and the first outlet aperture (46);
o create a fluid flow in the second circuit between the second inlet aperture (36b) and the second outlet aperture (54).

4. Method according to claim 3, wherein the first inlet aperture (36a) is made by forming a recess (38) in the thickness of the preform (32) followed by making holes (42) for fluidic connection to said certain first pipes (18).

5. Method according to claim 4, wherein the second inlet aperture (36b) is made by forming said recess (38) followed by making a hole (44) for fluidic connection to said second given pipe (24).

6. Method according to one of claims 1 to 5, comprising a step of adding a sealing plate (56) to the middle part of the preform, this plate being provided with fluid passage cut-outs.

7. Method according to claim 6, wherein the sealing plate (56) can be covered with a collecting plate (58) provided with fluid connection pipes for the fluid supply to and the fluid outlet from the first and second pipes.
